# EUROPEAN PATENT APPLICATION

(11) **EP 4 050 399 A1**
(43) Date of publication of application: **31.08.2022**
(21) Application number: 19949834.6
(22) Date of filing: 25.11.2019
(51) Int. Cl.: G02B 26/10

(54) **OPTICAL SCANNER HAVING MIRROR SELF-ANGLE ADJUSTMENT FUNCTION, AND MIRROR ANGLE ADJUSTMENT METHOD THEREOF**

(30) Priority: 25.10.2019 KR 20190133400
(71) Applicant: Talentis Corp, Gwangju 61009 (KR)
(72) Inventor: KIM, Kyungsu, Gwangju 62256 (KR); KIM, Hwansun, Gwangju 61018 (KR); KIM, Heemin, Gwangju 62259 (KR); EOM, Junseong, Daejeon 35222 (KR)
(74) Representative: Isarpatent
(86) International application number: PCT/KR2019/016238
(87) International publication number: WO 2021/080079

(57) **Abstract**

The present invention relates to an optical scanner having a mirror self-angle adjustment function, and a mirror angle adjustment method thereof, and is for compensating for and adjusting the attenuation characteristics of the optical scanner without the addition of an external controller. The optical scanner according to the present invention comprises a mirror that reflects light and an electrostatic driver that pivots the mirror. The electrostatic driver comprises a fixed electrode part having a plurality of driving electrodes, which are connected to the mirror and arranged in rows, and a plurality of fixed electrodes arranged in rows alternately with the plurality of driving electrodes and pivoting the mirror via an applied driving voltage. The plurality of fixed electrodes include a plurality of main electrodes to which the driving voltage is applied, and a plurality of additional electrodes. The plurality of additional electrodes are electrically isolated from the plurality of main electrodes, and the driving voltage is selectively applied to the plurality of additional electrodes.

## Description

### [Technical Field]

The present invention relates to an optical scanner. More particularly, the present invention relates to an optical scanner having a self-angle adjustment function of a mirror manufactured through a micro electro mechanical systems (MEMS) process and to a method for adjusting a mirror angle.

### [Background Art]

Recently, in various technical fields such as display, printing apparatus, precision measurement, and precision processing, research on micro electro mechanical systems (MEMS) devices manufactured by semiconductor process technology has been actively carried out. Particularly, in the display field in which an image is realized by scanning light emitted from a light source into a screen area, or in the scanning field in which image information is read by scanning light to a screen area and receiving reflected light, a micro-structured optical scanner is attracting attention. That is, because the optical scanner can modulate reflected light and has fast, accurate operation and response speed, and low power consumption, it can be applied to optical communication devices such as a variable optical attenuator (VOA), a 1×N switch, a wavelength selective switch (WSS), a tunable laser, and the like. In addition, the optical scanner can be applied to various fields such as optical coherence tomography (OCT), pico projector, smart headlight, LiDAR, skin care machine, and the like.

Generally, the optical scanner refers to a structure in which a mirror for reflecting light and an electrostatic actuator for pivoting the mirror are formed in a single chip by using MEMS process technology.

The electrostatic actuator has a structure in which driving electrodes are formed in a direction parallel to a plane of a moving stage or moving structure, and fixed electrodes corresponding to the driving electrodes are disposed at fixed positions alternately with the driving electrodes and formed, like the driving electrodes, parallel to the plane direction of the stage. The electrostatic actuator has a difference in height or inclination between the driving electrode and the fixed electrode in order to rotate by electrostatic force.

In the optical scanner, the number of driving electrodes and fixed electrodes is determined in consideration of an applied voltage depending on driving conditions of the optical scanner in the MEMS design and manufacturing step.

The optical scanner may need to fine-tune a mirror angle depending on usage environments. For example, the VOA is a case of compensating and adjusting the attenuation characteristics. That is, the VOA is an important component used to control the output of an optical signal in a wavelength division multiplexing (WDM) optical transmission system composed of an optical amplifier, an optical add/drop multiplexer (OADM), and the like. The VOA using the optical scanner provides fast response time and high performance, and has many advantages in terms of product yield and price as it can be mass-produced.

However, the VOA using the optical scanner has difficulty in ensuring a desired amount of attenuation after final assembly due to a MEMS process error and an assembly error with a collimator. That is, because the number of driving electrodes and fixed electrodes is determined in the manufacturing step of the optical scanner, it is impossible to fine-tune the mirror angle in the manufactured optical scanner.

In order to solve this problem, research on a method for reducing the above-mentioned errors in the assembly step is being conducted. For example, US Patent No. 07450812 (date of patent: November 11, 2018) discloses a system and method for adjusting the attenuation amount using an external controller. However, the VOA disclosed in US Patent No. 07450812 requires an external controller to compensate and adjust the attenuation characteristics and thus has a disadvantage of requiring additional parts.

### [Prior Art Literature]

### [Patent Literature]

US Patent No. 07450812 (date of patent: November 11, 2018)

### [Disclosure]

### [Technical Problem]

Accordingly, it is an object of the present invention to provide an optical scanner, and a mirror angle adjustment method thereof, having a mirror self-angle adjustment function capable of compensating and adjusting attenuation characteristics without adding an external controller.

Another object of the present invention is to provide an optical scanner, and a mirror angle adjustment method thereof, having a mirror self-angle adjustment function capable of improving a manufacturing yield by performing the mirror self-angle adjustment in a module alignment step.

### [Technical Solution]

In order to solve the above problems, the present invention provides an optical scanner comprising a mirror reflecting light, and an electrostatic actuator pivoting the mirror by an applied driving voltage.

The electrostatic actuator includes a plurality of driving electrodes connected to the mirror and arranged in rows, and a fixed electrode unit including a plurality of fixed electrodes arranged in alternating rows with the plurality of driving electrodes and pivoting the mirror by an applied driving voltage.

The plurality of fixed electrodes include a plurality of main electrodes to which the driving voltage is applied, and a plurality of additional electrodes electrically isolated from the plurality of main electrodes, wherein the driving voltage is selectively applied to the plurality of additional electrodes.

Among the plurality of additional electrodes, the number of the additional electrodes to which the driving voltage is applied is proportional to an angular size of the mirror to be adjusted.

In the plurality of fixed electrodes, the plurality of main electrodes may be centrally arranged, and the plurality of additional electrodes may be arranged on both sides of the plurality of main electrodes.

The fixed electrode unit includes a main electrode part including the plurality of main electrodes and a main electrode plate to which the plurality of main electrodes are connected and supported, and an additional electrode part disposed adjacent to the main electrode part, electrically isolated from the main electrode part, and including the plurality of additional electrodes and a plurality of additional electrode plates connected to the plurality of additional electrodes.

The plurality of additional electrodes arranged on each of both sides of the plurality of main electrodes are connected to at least one additional electrode plate.

The optical scanner according to the present invention further comprises a power terminal for applying the driving voltage to the main electrode plate and the plurality of additional electrode plates; a main bonding wire electrically connecting the main electrode plate and the power terminal; and an additional bonding wire electrically connecting the power terminal and an additional electrode plate, among the plurality of additional electrode plates, connected to an additional electrode to which the driving voltage is to be applied.

The optical scanner according to the present invention may further comprise a bonding wire electrically connecting the main electrode plate and an additional electrode plate, among the plurality of additional electrode plates, connected to an additional electrode to which the driving voltage is to be applied.

The optical scanner according to the present invention may further comprise a tilt unit applying a physical force to the fixed electrode unit to shift the plurality of driving electrodes and the plurality of fixed electrodes from each other.

The optical scanner according to the present invention may be a variable optical attenuator (VOA) or a switch.

In addition, the present invention provides a method for adjusting an angle of a mirror of the optical scanner, the method comprising measuring an angle of light reflected depending on rotation of the mirror by applying a driving voltage only to the plurality of main electrodes; determining the number of additional electrodes to be connected, based on the measured angle of light and a predetermined amount of attenuation; and electrically connecting the determined number of additional electrodes to a power terminal for applying a driving voltage to the plurality of main electrodes by wire bonding.

### [Advantageous Effects]

The optical scanner according to the present invention includes the main electrodes and the additional electrodes in the fixed electrode unit, and the attenuation characteristics can be compensated and adjusted without adding an external controller by adjusting the number of the additional electrodes to which the driving voltage will be applied. That is, the angle of light reflected depending on the rotation of the mirror is measured by applying the driving voltage to the main electrodes. Based on the measured angle of light and a predetermined amount of attenuation, the number of additional electrodes to be connected is determined. In order to apply power to the determined number of additional electrodes, the power terminal is electrically connected to the determined number of additional electrodes via wire bonding. Therefore, it is possible to adjust the angle of the mirror in consideration of the attenuation characteristics of the optical scanner under the same driving voltage.

As such, performing the self-angle adjustment of the mirror in the module alignment step can optimize the performance of the module by minimizing the angular deviation of the mirrors when manufacturing the module including the plurality of optical scanners according to the present invention, and can also improve the manufacturing yield of the optical scanner.

### [Description of Drawings]

FIG. 1 is a plan view illustrating an optical scanner having a self-angle adjustment function of a mirror, in a state before wire bonding, according to an embodiment of the present invention.
FIG. 2 is a plan view illustrating the optical scanner of FIG. 1 after wire bonding.
FIG. 3 is a cross-sectional view taken along line 3-3 of FIG. 2.
FIG. 4 is a flow diagram illustrating a method for adjusting a mirror angle of an optical scanner according to an embodiment of the present invention.

### [Mode for Disclosure]

In the following, only parts necessary for understanding embodiments of the present invention will be described, and descriptions of other parts will be omitted in the scope not disturbing the subject matter of the present invention.

The terms and words used herein should not be construed as limited to ordinary or dictionary definition, and should be construed in light of the meanings and concepts consistent with the subject matter of the present invention on the basis of the principle that the inventor can properly define his own invention as the concept of the term to describe it in the best way. It is therefore to be understood that embodiments disclosed herein are merely exemplary and various equivalents or modifications thereof are possible.

Hereinafter, the present invention will be described in detail with reference to the accompanying drawings.

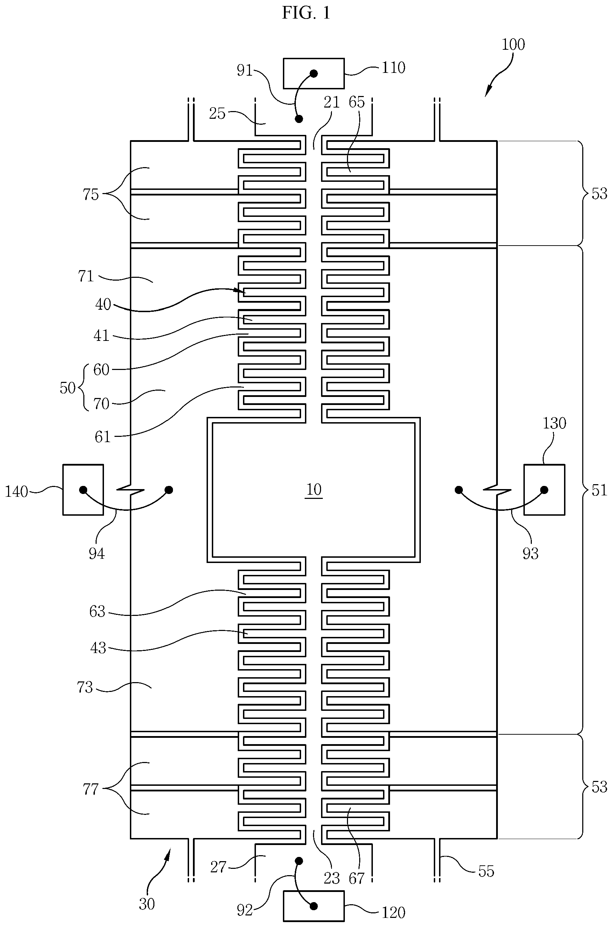

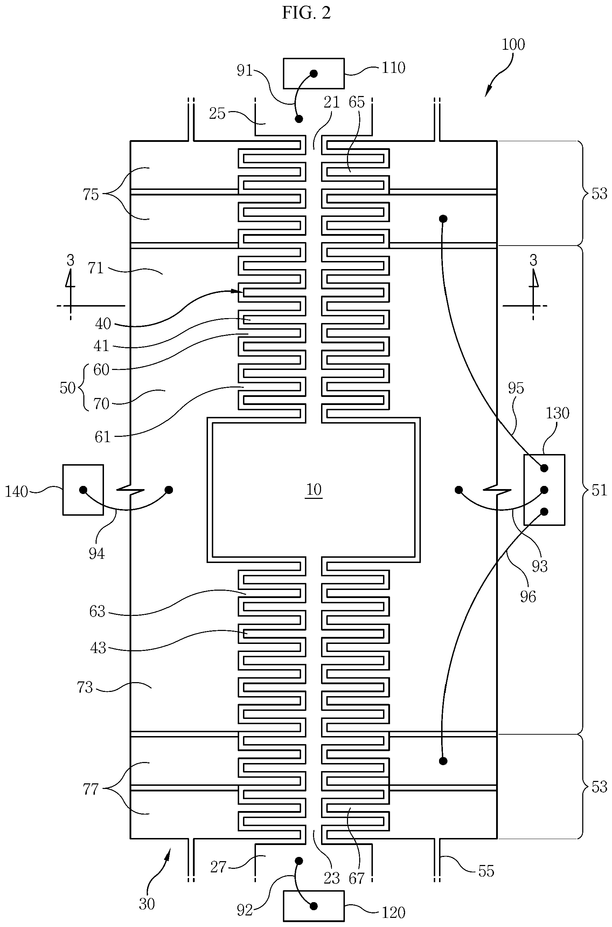

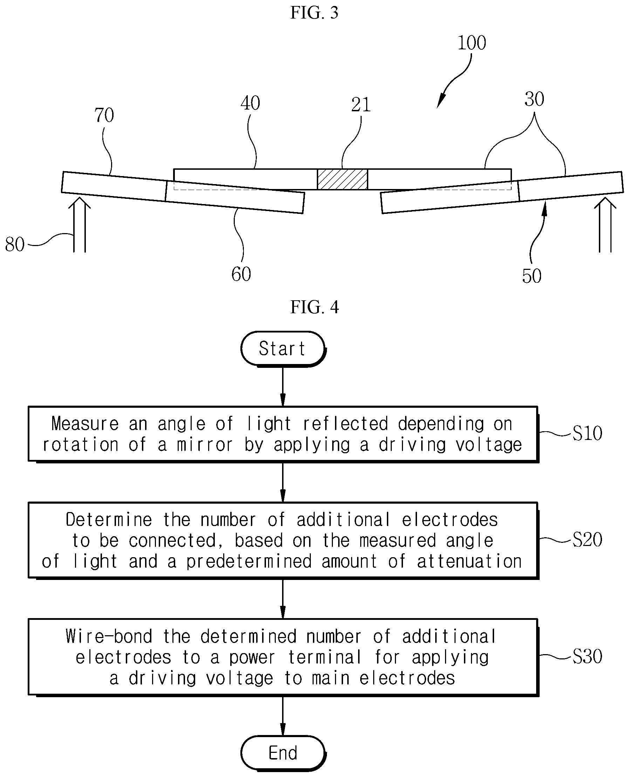

FIG. 1 is a plan view illustrating an optical scanner having a self-angle adjustment function of a mirror, in a state before wire bonding, according to an embodiment of the present invention. FIG. 2 is a plan view illustrating the optical scanner of FIG. 1 after wire bonding. FIG. 3 is a cross-sectional view taken along line 3-3 of FIG. 2.

Referring to FIGS. 1 to 3, an optical scanner 100 according to this embodiment is an optical scanner having a self-angle adjustment function of a mirror 10, and may be manufactured through a MEMS process based on a silicon on insulator (SOI) substrate and a wafer.

The optical scanner 100 according to this embodiment includes the mirror 10 that reflects light, and an electrostatic actuator 30 that pivots the mirror 10. The electrostatic actuator 30 includes a plurality of driving electrodes 40 and a fixed electrode unit 50 including a plurality of fixed electrodes 60. The plurality of driving electrodes 40 are connected to the mirror 10 and arranged in rows. The fixed electrode unit 50 includes the plurality of fixed electrodes 60 that are arranged in alternating rows with the plurality of driving electrodes 40 and pivot the mirror 10 by an applied driving voltage. The plurality of fixed electrodes 60 include a plurality of main electrodes 61 and 63 to which the driving voltage is applied, and a plurality of additional electrodes 65 and 67. The plurality of additional electrodes 65 and 67 are electrically isolated from the plurality of main electrodes 61 and 63, and the driving voltage is selectively applied to the plurality of additional electrodes 65 and 67. In addition, the optical scanner 100 according to this embodiment may further include connecting shafts 21 and 23 and a tilt unit 80.

The respective parts of the optical scanner 100 according to this embodiment will be described hereinafter in detail.

The mirror 10 reflects the incident light. The mirror 10 reflects the incident light while pivoting in a predetermined angular range in response to the intensity of the driving voltage applied to the fixed electrode unit 50.

The connecting shafts 21 and 23 include first and second connecting shafts 21 and 23 connected to opposite sides of the mirror 10. The first and second connecting shafts 21 and 23 enable rotation (tilting) of the mirror 10 in a predetermined angular range by the driving voltage applied to the fixed electrode unit 50. When applying the driving voltage to the fixed electrode unit 50 is stopped, the first and second connecting shafts 21 and 23 rotate the mirror 10 oppositely by the elastic force accumulated by the rotation to return it to its original position. At the other end of each of the first and second connecting shafts 21 and 23 opposite to one end to which the mirror 10 is connected, each of first and second ground pads 25 and 27 are formed.

The fixed electrode unit 50 includes the plurality of fixed electrodes 60 and a fixed electrode plate 70 to which the plurality of fixed electrodes 60 are connected. The fixed electrode plate 70 includes main electrode plates 71 and 73 to which the plurality of main electrodes 61 and 63 are connected together, and a plurality of additional electrode plates 75 and 77 to which the plurality of additional electrodes 65 and 67 are connected. The fixed electrode plate 70 is rotatably installed via a pair of fixed shafts 55. The pair of fixed shafts 55 may be formed parallel to the connecting shafts 21 and 23.

The fixed electrode unit 50 includes a main electrode part 51 and an additional electrode part 53. The main electrode part 51 includes the plurality of main electrodes 61 and 63 and the main electrode plates 71 and 73 to which the plurality of main electrodes 61 and 63 are connected and supported. The additional electrode part 53 is disposed adjacent to the main electrode part 51 and is electrically isolated from the main electrode part 51. The additional electrode part 53 includes the plurality of additional electrodes 65 and 67 and the plurality of additional electrode plates 75 and 77 connected to the plurality of additional electrodes 65 and 67.

The additional electrode plates 75 and 77 are formed to be wider than the connected additional electrodes 65 and 67 so that bonding wires 95 and 96 can be stably bonded. Although in this embodiment the plurality of additional electrodes 65 and 67 are exemplarily shown as being connected to the additional electrode plates 75 and 77, the present invention is not limited thereto. That is, at least one additional electrode may be connected to the additional electrode plate.

In the plurality of fixed electrodes 60, the plurality of main electrodes 61 and 63 are centrally arranged, and the plurality of additional electrodes 65 and 67 are arranged on both sides of the plurality of main electrodes 61 and 63. In the plurality of additional electrodes 65 and 67, the additional electrodes 65 and 67 to which the driving voltage is applied may be selected from the additional electrodes 65 and 67 adjacent to the plurality of main electrodes 61 and 63.

The number of the plurality of additional electrodes 65 and 67 is smaller than the number of the plurality of main electrodes 61 and 63. That is, the main electrodes 61 and 63 occupying a majority of the fixed electrodes 60 determine a main rotation angle of the mirror 10. Through the number of the additional electrodes 65 and 67 to which the driving voltage is applied, the main rotation angle is finely adjusted under applying of the same driving voltage. Among the plurality of additional electrodes 65 and 67, the number of the additional electrodes 65 and 67 to which the driving voltage is applied is proportional to an angular size of the mirror 10 to be adjusted. That is, as the angular size of the mirror 10 to be adjusted increases, the number of additional electrodes 65 and 67 also increases. Alternatively, as the amount of attenuation to be adjusted increases, the number of additional electrodes 65 and 67 also increases.

Bonding wires 91, 92, 93, 94, 95, and 96 apply the driving voltage necessary for the pivoting of the mirror 10 to the electrostatic actuator 30 from a power supply unit. As the bonding wires 91, 92, 93, 94, 95, and 96, a material having good electrical conductivity such as gold, copper, aluminum, or the like may be used.

For applying the driving voltage to the electrostatic actuator 30, ground terminals 110 and 120 and power terminals 130 and 140 are disposed around the electrostatic actuator 30. The ground terminals 110 and 120 are disposed close to the connected first and second ground pads 25 and 27, respectively. The power terminals 130 and 140 are disposed close to the connected main electrode plates 71 and 73, respectively. The ground terminals 110 and 120 include a first ground terminal 110 and a second ground terminal 120. The power terminals 130 and 140 include a positive power terminal 130 and a negative power terminal 140.

The bonding wires 91, 92, 93, 94, 95, and 96 include first to fourth bonding wires 91, 92, 93, and 94, and first and second additional bonding wires 95 and 96.

The first bonding wire 91 electrically connects the first ground pad 25 and the first ground terminal 110.

The second bonding wire 92 electrically connects the second ground pad 27 and the second ground terminal 120.

The third bonding wire 93 electrically connects the positive power terminal 130 and the main electrode plates 71 and 73 to which the positive power is to be applied.

The fourth bonding wire 94 electrically connects the negative power terminal 140 and the main electrode plates 71 and 73 to which the negative power is to be applied.

The first and second additional bonding wires 95 and 96 electrically connect the power terminals 130 and 140 and the additional electrode plate 75 to which the driving voltage is to be applied. By the first and second additional bonding wires 95 and 96, the additional electrode plate 75 is electrically connected to the power terminals 130 and 140 to which the main electrode plates 71 and 73 of the side on which the additional electrode plate 75 is disposed are connected. Disclosed in this embodiment is an example in which the additional electrode plate 75 disposed on both sides of the main electrode plates 71 and 73 to which the positive power is applied is electrically connected by the first and second additional bonding wires 95 and 96 to the positive power terminal 130. Conversely, the additional electrode plate 75 disposed on both sides of the main electrode plates 71 and 73 to which the negative power is applied may be electrically connected by the first and second additional bonding wires to the negative power terminal 140.

The number of the additional electrodes 65 and 67 connected by the first and second additional bonding wires 95 and 96 is determined in consideration of a predetermined amount of attenuation and an angle of light reflected depending on the rotation of the mirror 10 in a state where the driving voltage is applied only to the main electrode part 51.

In order for the mirror 10 to be stably rotated through connection of the additional electrodes 65 and 67, the same number of additional electrodes 65 and 67 to be connected may be selected vertically or horizontally around the mirror 10.

On the other hand, if the target rotation angle of the mirror 10 can be ensured with the driving voltage applied to the main electrodes 61 and 63, there is no need to apply the driving voltage to the additional electrodes 65 and 67. That is, as shown in FIG. 1, the first and second additional bonding wires 95 and 96 may be omitted. The first and second additional bonding wires 95 and 96 are used only when connection of the additional electrodes 65 and 67 is required.

In this embodiment, in order to apply the driving voltage to the additional electrodes 65 and 67, an example of connecting the additional electrodes 65 and 67 and the positive power terminal 130 through the first and second bonding wires 95 and 96 is described, but the invention is not limited thereto. For example, the additional electrodes 65 and 67 to which the driving voltage is to be applied may be electrically connected to the adjacent main electrode plates 71 and 73 through additional bonding wires.

In addition, the tilt unit 80 applies a physical force to the fixed electrode plate 70 of the fixed electrode unit 50 to shift the plurality of driving electrodes 40 and the plurality of fixed electrodes 60 from each other. In this embodiment, an example in which the tilt unit 80 lifts an outer portion of the fixed electrode plate 70 around the pair of fixed shafts 55 so that the plurality of fixed electrodes 60 are tilted down below the plurality of driving electrodes 40 is disclosed, but the invention is not limited thereto. For example, when the tilt unit 80 lifts an inner portion of the fixed electrode plate 70 around the pair of fixed shafts 55, the plurality of fixed electrodes 60 may be tilted up above the plurality of driving electrodes 40.

Although in this embodiment an example in which the tilt unit 80 lifts the fixed electrode plate 70 under the fixed electrode unit 50 to shift the plurality of fixed electrodes 60 with respect to the plurality of driving electrodes 40, the invention is not limited thereto. For example, the tilt unit may shift the plurality of fixed electrodes with respect to the plurality of driving electrodes by pressing the fixed electrode plate above the fixed electrode unit. That is, the tilt unit 80 shifts the plurality of fixed electrodes 60 to have a certain angle with respect to the plurality of driving electrodes 40 maintaining a horizontal state.

The optical scanner 100 according to this embodiment may be applied to a variable optical attenuator (VOA) or a switch, but it is not limited thereto.

In the optical scanner 100 according to this embodiment, the plurality of driving electrodes 40 are formed on each of the first and second connecting shafts 21 and 23.

The plurality of driving electrodes 40 includes a plurality of first driving electrodes 41 formed on both sides of the first connecting shaft 21, and a plurality of second driving electrodes 43 formed on both sides of the second connecting shaft 23.

The plurality of fixed electrodes 60 includes a plurality of first fixed electrodes 61 and 65 arranged in alternating rows with the plurality of first driving electrodes 41, and a plurality of second fixed electrodes 63 and 67 arranged in alternating rows with the plurality of second driving electrodes 43.

The plurality of first fixed electrodes 61 and 65 include a plurality of first main electrodes 61 arranged and formed from a starting portion of the first connecting shaft 21 extending from the mirror 10, and a plurality of first additional electrodes 65 arranged and formed outside the plurality of first main electrodes 61.

The plurality of first main electrodes 61 are collectively connected to the first main electrode plate 71. The plurality of first additional electrodes 65 are connected to a plurality of first additional electrode plates 75. In this embodiment, an example in which two first additional electrodes 65 are connected to one first additional electrode plate 75 is disclosed.

In addition, the plurality of second fixed electrodes 63 and 67 include a plurality of second main electrodes 63 arranged and formed from a starting portion of the second connecting shaft 23 extending from the mirror 10, and a plurality of second additional electrodes 67 arranged and formed outside the plurality of second main electrode 63.

The plurality of second main electrodes 63 are collectively connected to the second main electrode plate 73. The plurality of second additional electrodes 67 are connected to a plurality of second additional electrode plates 77. In this embodiment, an example in which two second additional electrodes 67 are connected to one second additional electrode plate 77 is disclosed.

The first and second main electrode plates 71 and 73 formed on each of both sides of the first and second connecting shafts 21 and 23 may be integrally formed. That is, the plurality of driving electrodes 60 and the fixed electrode unit 50 are formed symmetrically left and right about the first and second connecting shafts 21 and 23.

In this embodiment, although an example in which the additional electrode parts 53 are respectively formed in the fixed electrode units 50 formed on both sides of the first and second connecting shafts 21 and 23 is disclosed, it is not limited thereto. For example, the additional electrode part 53 may be formed in only one of the fixed electrode units 50 of both sides.

Meanwhile, although the present embodiment discloses an example in which the plurality of driving electrodes 40 are formed from the connecting shafts 21 and 23 connected to the mirror 10, the invention is not limited thereto. For example, a plurality of driving electrodes may be formed on one side or opposite sides of a mirror mounting plate onto which the mirror is attached.

In the optical scanner 100 according to the present embodiment, the mirror 10 rotates clockwise or counterclockwise at a certain angle around the first and second connecting shafts 21 and 23 as a rotation axis due to a potential difference occurring between the plurality of fixed electrodes 60 positioned on both sides of the plurality of driving electrodes 40. When the power applied to the fixed electrode unit 50 is cut off, the mirror 10 rotates and returns to its original position by the elastic force accumulated on the first and second connecting shafts 21 and 23.

In addition, by adjusting the number of the additional electrodes 65 and 67 connected to the main electrode part 51, the rotation angle of the mirror 10 can be easily fine-adjusted under the same applied voltage.

Hereinafter, a method for adjusting a mirror angle of the optical scanner 100 according to this embodiment will be described with reference to FIGS. 1 to 4. FIG. 4 is a flow diagram illustrating a method for adjusting a mirror angle of an optical scanner 100 according to an embodiment of the present invention.

First, at step S 10, a driving voltage is applied only to the plurality of main electrodes 61 and 63 as shown in FIG. 1, and the angle of light reflected depending on the rotation of the mirror 10 is measured. This step S10 is performed while the electrostatic actuator 30 is electrically connected via the first to fourth bonding wires 91, 92, 93, and 94. That is, the first bonding wire 91 electrically connects the first ground pad 25 and the first ground terminal 110. The second bonding wire 92 electrically connects the second ground pad 27 and the second ground terminal 120. The third bonding wire 93 electrically connects the positive power terminal 130 and the main electrode plates 71 and 73 to which the positive power is to be applied. The fourth bonding wire 94 electrically connects the negative power terminal 140 and the main electrode plates 71 and 73 to which the negative power is to be applied. The step S 10 is performed in a state where the additional electrodes 65 and 67 are not electrically connected to the power terminals 130 and 140.

Next, at step S20, the number of additional electrodes 65 and 67 to be connected is determined based on the measured angle of light and a predetermined amount of attenuation. Here, the predetermined amount of attenuation is determined based on a predetermined light angle. A difference value between the measured light angle and the predetermined light angle is calculated, and the number of additional electrodes 65 and 67 corresponding to the angle of the mirror 10 to be adjusted is determined based on the calculated difference value.

Next, at step S30, the determined number of additional electrodes 65 and 67 are connected to the power terminal 130 as shown in FIG. 2 to apply power to the determined number of additional electrodes 65 and 67. That is, the first and second additional bonding wires 95 and 96 electrically connect the power terminal 130 and the additional electrode plate 75 to which the determined number of additional electrodes 65 and 67 are connected.

As such, applying the driving voltage to the additional electrodes 65 and 67 allows obtaining the optimally corrected rotation angle of the mirror 10.

Meanwhile, after the wire bonding of the step S30, a step of applying the driving voltage having applied to the main electrode part 51 to the wire-bonded additional electrodes 65 and 67 and thereby verifying whether the mirror 10 rotates at the corrected rotation angle may be further performed.

As described hereinbefore, the optical scanner 100 according to the present embodiment includes the main electrodes 61 and 63 and the additional electrodes 65 and 67 in the fixed electrode unit 50, and the attenuation characteristics can be compensated and adjusted without adding an external controller by adjusting the number of the additional electrodes 65 and 67 to which the driving voltage will be applied. That is, the angle of light reflected depending on the rotation of the mirror 10 is measured by applying the driving voltage to the main electrodes 61 and 63. Based on the measured angle of light and a predetermined amount of attenuation, the number of additional electrodes 65 and 67 to be connected is determined. In order to apply power to the determined number of additional electrodes 65 and 67, the power terminal 130 is electrically connected to the determined number of additional electrodes 65 and 67 via wire bonding. Therefore, it is possible to adjust the angle of the mirror 10 in consideration of the attenuation characteristics of the optical scanner 100 under the same driving voltage.

As such, performing the self-angle adjustment of the mirror 10 in the module alignment step can optimize the performance of the module by minimizing the angular deviation of the mirrors 10 when manufacturing the module including the plurality of optical scanners 100 according to the present embodiment, and can also improve the manufacturing yield of the optical scanner 100.

In addition, the optical scanner 100 according to the present embodiment allows adjusting the angle of the mirror 10 through a simple process such as wire bonding in the module alignment step.

Meanwhile, the embodiments disclosed in the description and drawings are merely presented as specific examples to aid understanding and are not intended to limit the scope of the present invention. It is apparent to those of ordinary skill in the art to which the present invention pertains that other modifications based on the technical contents of the present invention can be implemented in addition to the embodiments disclosed herein.

### [Reference Numerals]

10: mirror 21: first connecting shaft 23: second connecting shaft
25: first ground pad 27: second ground pad 30: electrostatic actuator
40: driving electrode 50: fixed electrode unit 51: main electrode part
53: additional electrode part 55: fixed shaft 60: fixed electrode
61: first main electrode 63: second main electrode
65: first additional electrode 67: second additional electrode 70: fixed electrode plate
71: first main electrode plate 73: second main electrode plate
75: first additional electrode plate 77: second additional electrode plate 80: tilt part
91: first bonding wire 92: second bonding wire
93: third bonding wire 94: fourth bonding wire
95: first additional bonding wire 96: second additional bonding wire
100: optical scanner 110: first ground terminal
120: second ground terminal 130: positive power terminal 140: negative power terminal

## Claims

1. An optical scanner comprising:
a mirror reflecting light; and
an electrostatic actuator pivoting the mirror,
wherein the electrostatic actuator includes:
a plurality of driving electrodes connected to the mirror and arranged in rows; and
a fixed electrode unit including a plurality of fixed electrodes arranged in alternating rows with the plurality of driving electrodes and pivoting the mirror by an applied driving voltage, and
wherein the plurality of fixed electrodes include:
a plurality of main electrodes to which the driving voltage is applied; and
a plurality of additional electrodes electrically isolated from the plurality of main electrodes, wherein the driving voltage is selectively applied to the plurality of additional electrodes.

2. The optical scanner of claim 1, wherein among the plurality of additional electrodes, the number of the additional electrodes to which the driving voltage is applied is proportional to an angular size of the mirror to be adjusted.

3. The optical scanner of claim 1, wherein in the plurality of fixed electrodes, the plurality of main electrodes are centrally arranged, and the plurality of additional electrodes are arranged on both sides of the plurality of main electrodes.

4. The optical scanner of claim 3, wherein the fixed electrode unit includes:
a main electrode part including the plurality of main electrodes and a main electrode plate to which the plurality of main electrodes are connected and supported; and
an additional electrode part disposed adjacent to the main electrode part, electrically isolated from the main electrode part, and including the plurality of additional electrodes and a plurality of additional electrode plates connected to the plurality of additional electrodes.

5. The optical scanner of claim 4, wherein the plurality of additional electrodes arranged on each of both sides of the plurality of main electrodes are connected to at least one additional electrode plate.

6. The optical scanner of claim 5, further comprising:
a power terminal for applying the driving voltage to the main electrode plate and the plurality of additional electrode plates;
a main bonding wire electrically connecting the main electrode plate and the power terminal; and
an additional bonding wire electrically connecting the power terminal and an additional electrode plate, among the plurality of additional electrode plates, connected to an additional electrode to which the driving voltage is to be applied.

7. The optical scanner of claim 5, further comprising:
a bonding wire electrically connecting the main electrode plate and an additional electrode plate, among the plurality of additional electrode plates, connected to an additional electrode to which the driving voltage is to be applied.

8. The optical scanner of claim 5, further comprising:
a tilt unit applying a physical force to the fixed electrode unit to shift the plurality of driving electrodes and the plurality of fixed electrodes from each other.

9. The optical scanner of one of claims 1 to 8, wherein the optical scanner is a variable optical attenuator (VOA) or a switch.

10. A method for adjusting an angle of a mirror of the optical scanner according to claim 9, the method comprising:
measuring an angle of light reflected depending on rotation of the mirror by applying a driving voltage only to the plurality of main electrodes;
determining the number of additional electrodes to be connected, based on the measured angle of light and a predetermined amount of attenuation; and
electrically connecting the determined number of additional electrodes to a power terminal for applying a driving voltage to the plurality of main electrodes by wire bonding.
